# EUROPÄISCHE PATENTSCHRIFT

(11) **EP 2 507 530 B1**
(45) Veröffentlichungstag und Bekanntmachung des Hinweises auf die Patenterteilung: **03.08.2016**
(21) Anmeldenummer: 10787023.0
(22) Anmeldetag: 27.11.2010
(51) Int. Cl.: F16D 65/12

(54) **RADBAUGRUPPE**
WHEEL ASSEMBLY
MODULE DE ROUE

(30) Priorität: 30.11.2009 DE 102009056075
(43) Veröffentlichungstag der Anmeldung: 10.10.2012
(73) Patentinhaber: Iprotec Maschinen- und Edelstahlprodukte GmbH, 32469 Petershagen-Friedewalde (DE)
(72) Erfinder: KOCHSIEK, Guido, 33818 Leopoldshöhe (DE)
(74) Vertreter: Rausch, Michael
(86) Internationale Anmeldenummer: PCT/EP2010/007202
(87) Internationale Veröffentlichungsnummer: WO 2011/069606

(56) Entgegenhaltungen:
- EP-A1- 1 656 511
- EP-A2- 0 994 269
- EP-A2- 1 258 404
- DE-A1- 1 655 403
- DE-A1- 2 165 817
- DE-A1- 10 158 501
- DE-A1-102004 023 748
- DE-A1-102006 003 088
- DE-C1- 3 844 476
- DE-U1- 8 330 703
- DE-U1- 9 205 072
- US-A1- 2005 082 125

## Beschreibung

Die Erfindung betrifft eine Radbaugruppe für ein Rad eines Kraftfahrzeuges, insbesondere für das Rad eines Pkws, mit einer von einer Radachse verdrehfest aufgenommenen Bremsscheibe und einem mit letzterer zusammenwirkenden Bremssattel, der als Festsattel ausgebildet gegenüber der Bremsscheibe feststehend an einem Radträger angeordnet ist, sowie einem Rad.

Radbaugruppen mit Bremseinrichtungen für Kraftfahrzeuge im Allgemeinen sowie Bremsscheibeneinrichtungen für Kraftfahrzeuge im Speziellen sind aus dem Stand der Technik an sich bekannt, z.B. aus EP-A-1 258 404.

Radbaugruppen umfassen ein Rad, welches mittels einer Antriebswelle, die üblicherweise von einem Getriebe ausgeht, angetrieben wird. Das Rad ist an einem dringenden Träger gelagert, der seinerseits in entsprechenden Aufhängungen gelagert ist. Eine mitdrehende Bremsscheibe wird gegenüber einem rotatorisch feststehenden Bremssattel verdreht. Der Bremssattel weist in der Regel hydraulisch betätigbare Bremselemente auf, die zum Abbremsen der Bremsscheibe und damit des Rades geeignet und vorgesehen sind.

Eine Bremsscheibeneinrichtung der vorbekannten Art verfügt über eine Bremsscheibe einerseits und einen Bremssattel andererseits, die im Bremsfall zusammenwirken. Dabei ist die Bremsscheibe mit der Radachse verdrehfest gekoppelt und dreht mit dieser mit. Der Bremssattel ist demgegenüber feststehend ausgebildet und an einem Radkörper angeordnet.

Ein herkömmlicher Bremssattel verfügt über wenigstens einen kolbenbetätigbaren Reibmittelträger, der im bestimmungsgemäßen Bremsfall an die dafür vorgesehene Oberfläche der Bremsscheibe angedrückt wird. Aus dem Stand der Technik sind auch solche Konstruktionen bekannt, bei denen zwei Reibmittelträger zum Einsatz kommen, die die Bremsscheibe im bestimmungsgemäßen Belastungs-, das heißt Bremsfall beidseitig beaufschlagen, so dass der eine Reibmittelträger gegen die eine Seite der Bremsscheibe und der andere Reibmittelträger gegen die andere Seite der Bremsscheibe gedrückt wird. Bei der Bremsscheibe kann es sich beispielsweise um eine innenbelüftete Bremsscheibe handeln.

Bei einer Bremsscheibeneinrichtung kommt es verschleißbedingt auch bei einer ordnungsgemäßen Verwendung zu Abnutzungserscheinungen, und zwar sowohl hinsichtlich der Bremsscheibe als auch bezüglich der Reibmittelträger des Bremssattels. Diese verschleißbedingte Abnutzung wird bei den aus dem Stand der Technik bekannten Bremsscheibeneinrichtungen dadurch kompensiert, dass die kolbenbelasteten Reibmittelträger des Bremssattels nachfahren. Auf diese Weise können sowohl ein Bremsscheibenabrieb als auch ein Abrieb der Reibmittelträger des Bremssattels ausgeglichen werden.

Obgleich sich vorbekannte Bremsscheibeneinrichtungen im alltäglichen Praxiseinsatz bewährt haben, besteht Verbesserungsbedarf, insbesondere mit Blick auf eine optimierte Bremswirkung auch im Verschleißfall von Bremsscheibe und/oder Reibmittelträger.

Darüber hinaus sind vorbekannte Radbaugruppen immer noch vergleichsweise schwer. Da das Rad lenkbar ist, ist der Radträger an einer entsprechenden Lenkeinrichtung angeordnet. Neben dem Verschleiß der Bremseinrichtung einerseits ergibt sich das unnötige Gewicht andererseits aus einer Vielzahl von notwendigen Einzelelementen. So muss beispielsweise auch eine Unwucht kompensiert werden, weshalb der Bremssattel üblicherweise auf sehr komplexen Baugruppen angeordnet ist, die ein Schwimmen des Bremssattels gegenüber der Scheibe ermöglichen. Aufgrund ständigen Temperaturwechsels, das heißt Erhitzung bis zum Glühen oder Einsatz in extrem kalten Bedingungen, aufgrund mechanischer Stöße und dergleichen kommt es zu Fehlpaarungen zwischen Scheibe und Bremssattel, beziehungsweise besonderen Belastungen des Bremssattels, so dass aufwändige Konstruktionen der Aufhängungen für die in der Regel auf der Scheibe schwimmenden Bremssättel erstellt werden müssen. Auch hier wird erneut Gewicht hinzugefügt. Ein ganz besonderer Aspekt derartiger Baugruppen ist der sogenannte Komfort. Darunter versteht man eine Geräuschfreiheit oder Geräuscharmut verbunden mit der Vermeidung von ruckartigen Wirkungsweisen und dergleichen.

Ausgehend vom vorbeschriebenen Stand der Technik liegt der vorliegenden Erfindung die Aufgabe zugrunde, eine Radbaugruppe bereitzustellen, welche aus wenigen Teilen gebildet werden kann, auch Gewichteinsparungen ermöglicht, eine verbesserte Bremswirkung bereitstellt und zwar auch bei verschleißbedingter Abnutzung der Bremsscheibe und/oder der Radmittelträger und insgesamt eine vereinfachte Montage ermöglicht.

Die technische Lösung dieser Aufgabe ergibt sich aus einer Radbaugruppe mit den Merkmalen des Anspruches 1. Alternative Lösungsansätze, die auch unabhängig von der in Anspruch 1 gekennzeichneten Lösung für sich genommen nutzbar sind, werden im folgenden beschrieben. Auch weitere Vorteile und Merkmale ergeben sich aus der folgenden Beschreibung sowie den Unteransprüchen.

Die Bremsscheibe ist in Längsrichtung der sie tragenden Radachse verschieblich ausgebildet. Dies ermöglicht eine Verschiebung der Bremsscheibe in Längsrichtung der Radachse relativ gegenüber dem Bremssattel und damit auch gegenüber den vom Bremssattel bereitgestellten Reibmittelträgern. Einer verschleißbedingten Abnutzung der Reibmittelträger und/oder der Bremsscheibe kann somit ergänzend durch ein Nachrücken der Bremsscheibe entgegengewirkt werden, weil in vorteilhafter Weise sichergestellt ist, dass die Bremsscheibe stets in ihrer Stellung zum Bremssattel mit Bezug auf die Längserstreckung in Richtung der Radachse optimiert ausgerichtet ist. Diese vorgesehene Längsverschieblichkeit der Bremsscheibe erweist sich insbesondere bei Bremssatteln von Vorteil, die beidseitig der Bremsscheibe wirken, das heißt die über kolbenbelastete Reibmittelträger beidseitig der Bremsscheibe verfügen.

Bei aus dem Stand der Technik bekannten Konstruktionen kann es aufgrund einer unterschiedlichen Abnutzung der Vorder- und der Rückseite einer Bremsscheibe bzw. den diesen Seiten jeweils zugeordneten Reibmittelträgern dazu kommen, dass sich eine die Bremswirkung verschlechternde Positionierung der Bremsscheibe relativ gegenüber den beiderseits der Bremsscheibe vorgesehenen Reibmittelträgern einstellt. Die Konstruktion schafft hier in vorteilhafter Weise Abhilfe, weil die Bremsscheibe in Längsrichtung der Radachse verschieblich ausgebildet ist, womit gewährleistet ist, dass sich die Bremsscheibe selbst einstellt und stets in einer optimierten Position gegenüber den vorder- wie rückseitig der Bremsscheibe vorgesehenen Reibmittelträgern ausgerichtet ist.

Die Konstruktion erbringt darüber hinaus den Vorteil, dass es im Anwendungs-, das heißt Bremsfall zu keinem thermischen Verzug infolge einer Ungleichbelastung von Vorder- und Rückseite der Bremsscheibe kommt. Da sich die Bremsscheibe stets selbst gegenüber den Reibmittelträgern des Bremssattels positioniert, ist sichergestellt, dass diese in gleicher Weise auf die Bremsscheibe einwirken, so dass vorder- wie rückseitig der Bremsscheibe die gleiche Krafteinwirkung auftritt.

Aufgrund ihrer längsverschieblichen Lagerung relativ gegenüber dem feststehenden Bremssattel kann die nach der erfindungsgemäßen Konstruktion vorgesehene Bremsscheibe auch als schwimmende Bremsscheibe bezeichnet werden. Diese ermöglicht aufgrund ihrer schwimmenden Lagerung eine Verschleißanpassung und gewährleistet darüber hinaus eine thermische Gleichbelastung im Bremsfall, was die Bremswirkung insgesamt verbessert. Darüber hinaus kann aufgrund der Gleichbelastung im Bremsfall der bei Bremseinrichtungen nach dem Stand der Technik in nachteiliger Weise auftretende "Schirmeffekt", das heißt ein Aus- oder Aufbeulen der Bremsscheibe vermieden werden. Damit ergibt sich insgesamt eine auch im Verschleißfall verbesserte Bremswirkung. Der sogenannte Schirmeffekt kann beispielsweise als Folge sehr starker Bremsvorgänge auftreten, beispielsweise bei Notbremsungen oder dergleichen. Im Stand der Technik wird von den Bremsflächen ein Drehmoment ungleich auf die Lagerung übertragen. Dies liegt daran, dass in der Regel eine ebene Scheibe unter Zwischenfügung von Belüftungslamellen im Reibflächenbereich nach einer Seite verstärkt wird. Die Aufnahme der Drehmomente wird also auf beiden Scheibenseiten sehr ungleich erfolgen, dem Grunde nach treten sogar Torsionsmomente innerhalb der Bremsscheibe auf. Da dies bei den erfindungsgemäßen Scheiben nicht erfolgt, sondern hier beidseitig eine gleichmäßige Belastung und ein beidseitig gleiches Aufnehmen von Drehmomenten erfolgt, können Belüftungsstege beispielsweise sehr dünn ausgebildet werden, womit Gewichtseinsparungen einhergehen, und die Scheibe kann optimal belüftet werden.

Zwar ist es bekannt, die Reibflächen von Bremsscheiben mit Löchern oder Riefen zu versehen, um beispielsweise Schmutz, Feuchtigkeit und dergleichen abzuleiten, mit der Erfindung wird jedoch vorgeschlagen, die Reibflächen mit unrunden Polygonzügen zu versehen. Diese bewirken gewichtsreduzierende Materialabtragungen und ermöglichen ein gesteuertes Führen von Feuchtigkeit, Wasser und Schmutz und können mit geringem wirtschaftlichem Aufwand hergestellt werden

Zum Zwecke der verdrehfesten Verbindung von Bremsscheibe und Radachse ist gemäß einem weiteren Merkmal der Erfindung ein Verbindungsteil vorgesehen. Dieses steht sowohl mit der Bremsscheibe als auch mit der Radachse formschlüssig in Eingriff, so dass eine Verdrehbewegung der Radachse über das Verbindungsteil auf die Bremsscheibe übertragen werden kann. Dabei ist die formschlüssige Verbindung zwischen Verbindungsteil einerseits und Radachse andererseits derart ausgestaltet, dass neben der verdrehfesten Verkopplung von Bremsscheibe und Radachse eine in Längsrichtung der Radachse verschiebliche Anordnung der Bremsscheibe gegenüber der Radachse ermöglicht ist. Das formschlüssig sowohl mit der Bremsscheibe als auch mit der Radachse in Eingriff stehende Verbindungsteil ermöglicht dabei aufgrund seines Formschlusses nur eine Drehkraftübertragung, das heißt Momentenübertragung, nicht aber eine Kraftübertragung in Längsrichtung der Antriebsachse.

Das Verbindungsteil verfügt gemäß einem weiteren Merkmal der Erfindung über eine Bohrung mit einer zur Querschnittskontur der Radachse korrespondierend ausgebildeten Innenkontur. Aufgrund dieser Ausgestaltung ist im vorbeschriebenen Sinn eine Drehkraft-, das heißt Momentenübertragung ausgehend von der Radachse auf die Bremsscheibe möglich, und zwar bei gleichzeitiger Längsverschieblichkeit der Bremsscheibe relativ gegenüber der Radachse. Bevorzugterweise sind dabei die Querschnittskontur der Radachse und die Innenkontur der Bohrung des Verbindungsteils polygonal ausgebildet.

Polygonal im Sinne der vorliegenden Erfindung umfasst grundsätzlich jeglichen von der reinen Kreisform abweichenden Querschnitt. Derartige unrunde Querschnitte lassen sich aufgrund neuartiger Unrund-Drehtechnologien herstellen. Die Ausbildung ist praktisch beliebig an den jeweiligen Anwendungsfall anpassbar.

Das Verbindungsteil ist gemäß einem weiteren Merkmal der Erfindung scheibenförmig ausgebildet, wobei das Verbindungsteil eine die Dicke der Bremsscheibe übersteigende Dicke in Längsrichtung der Radachse aufweist. Aufgrund dieser Ausgestaltung ist eine in ihren Ausmaßen definierte Längsverschiebung der Bremsscheibe in Längsrichtung der Radachse relativ zur Radachse, dem Verbindungsteil und dem relativ gegenüber der Radachse feststehenden Bremssattel möglich.

Die vorbeschriebene Ausgestaltung erweist sich aus vielerlei Gründen als vorteilhaft. Aufgrund der längsverschieblichen Anordnung des Verbindungsteils gegenüber der Radachse ist eine leichte Montage möglich, da ein Zentralverschluss Verwendung finden kann. Für eine Montage bzw. Demontage ist das Verbindungseil in einfacher Weise auf die Antriebsachse aufzustecken und beispielsweise mittels eines Zentralverschlusses in der gewünschten Position relativ gegenüber der Antriebsachse lagezufixieren. Nach einem Aufschieben bzw. Aufstecken des Verbindungsteils auf die Antriebswelle und anschließender Lagefixierung ist eine ungewünschte Relatiwerschiebung des Verbindungsteils gegenüber der Radachse in Längsrichtung derselben unterbunden. Aufgrund der polygonal ineinandergreifenden geometrischen Ausgestaltungsform von Innenbohrung des Verbindungsteils einerseits und Außenkontur der Radachse andererseits ist im Übrigen eine verdrehfeste Verbindung zwischen diesen beiden Baukomponenten gewährleistet.

Die Bremsscheibe kann nun in einem gleichfalls einfachen Montageschritt mit der Radachse verbunden, das heißt verkoppelt werden. Dabei sorgt die formschlüssige Verbindung von Verbindungsteil einerseits und Bremsscheibe andererseits dafür, dass die Bremsscheibe verdrehfest gegenüber der Radachse, gleichzeitig aber längsverschieblich zu dieser angeordnet ist, so dass im vorbeschriebenen Sinn ein Nachstellen der Bremsscheibe gegenüber der Radachse und damit gegenüber dem relativ zur Radachse feststehenden Bremssattel möglich ist.

Das bevorzugterweise scheibenförmig ausgebildete Verbindungsteil verfügt über einen Innenring und einen Außenring, die über entsprechende Stege miteinander verbunden sind. Dabei trägt der Außenring gemäß einem weiteren Merkmal der Erfindung nach außen ragende Fortsätze, die im montierten Zustand in an der Bremsscheibe ausgebildete Ausnehmungen formschlüssig zumindest teilweise eingreifen. Aufgrund dieser Ausgestaltung wird die schon vorbeschriebene verdrehfeste Verbindung von Verbindungsteil einerseits und Bremsscheibe andererseits ermöglicht, die aber zugleich eine Verschiebung der Bremsscheibe relativ gegenüber dem Verbindungsteil in Längsrichtung der Radachse gestattet.

Der Verbindungsteil wird durch einzelne beispielsweise aus Aluminium gebildeten Segmenten gebildet, die ihrerseits eine Filterwirkung bereitstellen. Die Verbindung erfolgt durch das Einsetzen von Stiftelementen in entsprechende Bohrungen. Die Aluminiumelemente haben eine Federwirkung und die Stifte werden im Kaltzustand unter Vorspannung eingesetzt. Da der Reibflächenbereich der Bremsscheibe aus Stahl oder zum Beispiel auch Guss ist, das Verbindungsteil aber aus Aluminium, haben beide einen unterschiedlichen Wärmeaustauschkoeffizienten und verhalten sich somit im Betrieb jeweils unterschiedlich. Dies erhöht die Vorspannung, so dass sich entgegen den aus dem Stand der Technik bekannten entsprechenden Systemen keinerlei Spiel einstellt. Während im Stand der Technik aufgrund auftretender Wärme und Ausdehnung in der Regel Spiel zwischen den Elementen entsteht, bewirkt der erfindungsgemäße Aufbau vorteilhafterweise eine bessere Fixierung.

Die Fortsätze des Außenrings sind bevorzugterweise polygonal zueinander ausgerichtet, was im Sinne der Erfindung bedeutet, dass die Fortsätze die Eckpunkte eines in der Ebene der Bremsscheibe liegenden, gedachten, das heißt virtuellen Polygons beziehungsweise Polygonsabschnitts darstellen.

Die Fortsätze des Außenrings des Verbindungsteils können gemäß einem weiteren Merkmal der Erfindung über Gewindebohrungen verfügen, wobei ein jeder Fortsatz jeweils eine Gewindebohrung aufweist. Diese Gewindebohrungen können der Aufnahme von Schrauben zur Befestigung der Felge eines Rades an dem Verbindungsteil und damit an der Bremsscheibe und der Radachse dienen. Alternativ zu dieser Ausgestaltung kann gemäß einem weiteren Merkmal der Erfindung auch vorgesehen sein, dass das Verbindungsteil als einstückiger Bestandteil der Felge ausgebildet ist.

Die Fortsätze des Verbindungsteils verfügen gemäß einem weiteren Merkmal der Erfindung über Kraftübertragungsflächen, die im montierten Zustand an entsprechenden Gegenflächen der zugehörigen Ausnehmungen der Bremsscheibe anliegen.

Die Berührungsflächen zwischen Fortsätzen einerseits und Gegenflächen der Bremsscheibe andererseits weisen aufgrund der vorbeschriebenen Konstruktion ein optimiertes Minimalmaß auf. In vorteilhafter Weise ergeben sich hierdurch nur sehr wenige und in ihrer geometrischen Abmessung nur sehr kleine Kontaktstellen zwischen Verbindungsteil und Bremsscheibe, wodurch ein verbesserter Wärmefluss innerhalb der Bremsscheibe erreicht wird, so dass die erfindungsgemäße Konstruktion in vorteilhafter Weise dazu beiträgt, durch thermische Belastungen bewirkte Bremsverschlechterungen zu minimieren.

Das nach der erfindungsgemäßen Konstruktion vorgesehene Verbindungsteil ist bevorzugterweise ein Gussteil, das aus einem Leichtmetall oder einer Leichtmetalllegierung, wie zum Beispiel Aluminium, Magnesium oder dergleichen gebildet ist. Die endfertige Form erhält das Verbindungsteil bevorzugterweise durch Polygondrehen, und zwar sowohl mit Bezug auf den Verbindungsabschnitt zur Radachse als auch hinsichtlich des Anschlussbereiches zur Bremsscheibe. Aufgrund seiner Ausgestaltung kann das Verbindungsteil auch als unrunder beziehungsweise polygonaler Verbinder bezeichnet werden.

Bei dem Rad ist gemäß einem erfinderischen Vorschlag eine Zentralbefestigung vorgesehen. Die durch ein Lager getragene Antriebsbaugruppe, auf welcher in oben beschriebener Weise die Bremsscheibe sitzt, setzt sich in einen vorzugsweise polygonal ausgebildeten Wellenendabschnitt fort. Auf diesen kann ein Rad aufgesetzt werden, welches seinerseits eine zentrale entsprechende polygonale Innenkontur aufweist. Diese kann beispielsweise durch einen Stahleinsatz gebildet werden, der bei der Herstellung des Rades in dieses mit eingegossen wird. Die Befestigung kann dann durch Aufschrauben einer zentralen Befestigungsmutter mit Innengewinde oder mit Außengewinde erfolgen, welche relativ zu dem Antriebsstummel fixiert wird. Auf diese Weise ist die Montage und ein Auswechseln des Rades besonders einfach.

Gemäß einem Vorschlag der Erfindung ist die Bremsscheibenbaugruppe ihrerseits am Rad angeordnet. Der erfindungsgemäße Aufbau des Rades umfasst somit einen zentralen Einsatz, welcher ein Lager aufnimmt. An dem zentralen Einsatz ist sowohl die Zentralbefestigung des Rades einerseits als auch direkt oder indirekt die Bremsscheibe andererseits befestigt. Der zentrale Einsatz kann auch insgesamt in das Rad einstückig integriert sein, wenn beispielsweise beide aus gleichem Material hergestellt sind, zum Beispiel Stahl/Stahl. Im Falle dass das Rad Aluminium ist und der Einsatz Stahl, ist dieser zusätzlich eingesetzt, beispielsweise auch direkt mit eingegossen.

Der besondere Vorteil der erfindungsgemäßen Ausgestaltung ergibt sich auch in einer optimalen Belüftung der Bremsscheibe, die beidseitig belüftet wird. Auf diese Weise werden negative thermische Einflüsse weitgehend vermieden. Darüber hinaus wird auch die Notwendigkeit von zusätzlichen Nabenbaugruppen vermieden. Auch muss der Bremssattel nicht mehr auf aufwändigen Vorrichtungen schwimmend relativ zur Scheibe positioniert werden, vielmehr schwimmt die Scheibe relativ zur Antriebseinheit und positioniert sich in jeder Phase optimal relativ zum Bremssattel automatisch beim Bremsvorgang.

Der Bremssattel ist gemäß einem vorteilhaften Vorschlag der Erfindung denkbar einfach aufgebaut. Er umfasst im Wesentlichen zwei Halbschalen, in welche die Hydraulikkolben und die Bremsklötze eingesetzt werden. Gemäß einem vorteilhaften Vorschlag der Erfindung werden die Halbschalen durch ein Kraftband zusammengehalten. Ein solches kann ein Stahlband sein, vorzugsweise aber auch ein CFK-Band. Durch diese Technik werden weiterhin Gewichte vermieden und die Halbschalen auf sehr einfache wirkungsvolle Weise verbunden. Bei der Bremssattelmontage kann durch Unterkühlung ein Schrumpfsitz ausgebildet werden. Gemäß einem weiteren vorteilhaften Vorschlag der Erfindung werden bei der Herstellung der Halbschalen in den Bremssattel die Hydraulikleitungen ausgebildet, so dass auch hier auf weitere Leitungen verzichtet werden kann. Der Bremssattel ist extrem leicht und aus einem Minimum von Teilen aufgebaut. Er eignet sich für die einseitige und die zweiseitige Bremsausrüstung.

Die erfindungsgemäße Ausgestaltung des Bremssattels bewirkt neben besserer Funktionalität auch eine erhebliche Gewichtsreduzierung. Insbesondere brauchen keine großartigen Unwuchten, Schläge oder dergleichen kompensierende mechanische Aufhängungen bereitgestellt werden. Grundsätzlich kann der erfindungsgemäße Bremssattel auch mit einseitigem Zylinder bestückt sein, so dass der Gegenpart passiv bremst. Auch bei einem einschaligen Aufbau wird mit der Erfindung vorgeschlagen, das Kraftband zur Kraftaufnahme einzusetzen. Dies ermöglicht die gewichtsoptimierte Konstruktion des Bremssattels. Darüber hinaus ermöglicht die Konstruktion des Bremssattels den Einsatz von unrunden Bremszylindern. Diese können großflächig in den Schalen ausgebildet werden, so dass auch deutlich weniger Bremsdruck erforderlich ist, um die gleichen Bremskraft zu erzeugen. Dies kann im Rahmen der Erfindung soweit optimiert werden, dass ein Bremskraftverstärker verzichtbar werden kann. Die Verwendung unrunder Bremszylinder macht auch eine Führung entbehrlich, die im Stand der Technik bei dem Einsatz runder Bremszylinder erforderlich ist, die auf diese Weise mittels einer Führung gegen Verdrehung gesichert werden.

Es werden eine Reihe von Erfindungen und Verbesserungen vorgeschlagen, die insbesondere den Aufbau einer Radbaugruppe eines Kraftfahrzeuges verbessern. Kraftfahrzeug im Sinne der vorliegenden Erfindung umfasst sämtliche Fahrzeuge wie Straßenfahrzeuge, Schienenfahrzeuge, Luftfahrzeuge aber auch Sonderfahrzeuge wie landwirtschaftliche Fahrzeuge, Baumaschinen und dergleichen.

Weitere Merkmale und Vorteile der Erfindung ergeben sich aus der nachfolgenden Beschreibung anhand der Fign. Dabei zeigen
- Fig. 1: die erfindungsgemäße Bremsscheibeneinrichtung in einer ersten Ausführungsform;
- Fig. 2: die erfindungsgemäße Bremsscheibeneinrichtung in einer zweiten Ausführungsform;
- Fig. 3: einen Bremssattel nach Fig. 2;
- Fig. 4: ein Verbindungsteil nach Fig. 1;
- Fig. 5: ein Verbindungsteil in einer alternativen Ausgestaltungsform;
- Fig. 6: eine Querschnittsdarstellung der Radachse nach Fig. 1 und
- Fig. 7: eine Bremsscheibe.

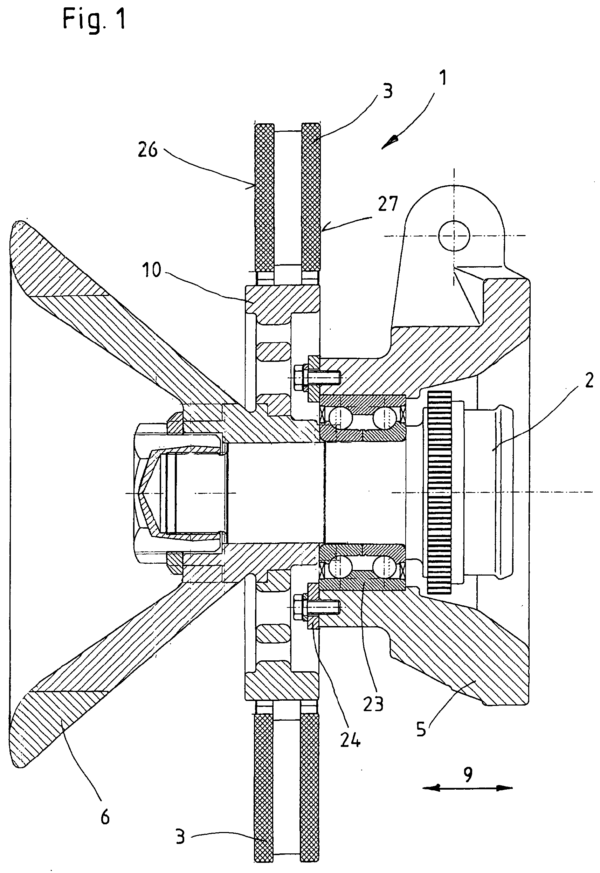

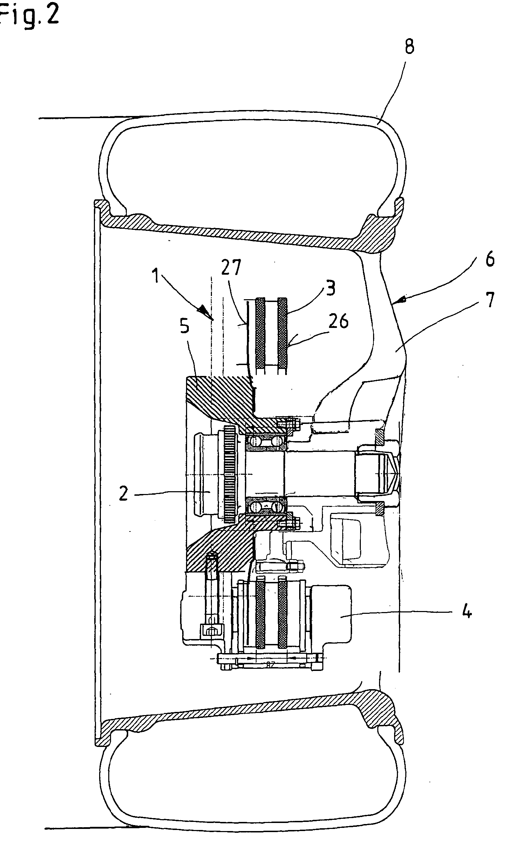

Fig. 1 zeigt in einer schematischen Schnittdarstellung die erfindungsgemäße Bremsscheibeneinrichtung 1. Die Bremsscheibeneinrichtung 1 verfügt über eine Bremsscheibe 3, die in den gezeigten Ausführungsformen nach den Fign. 1 und 2 als innenbelüftete Bremsscheibe 3 ausgebildet ist.

Die Bremsscheibe 3 ist verdrehfest mit einer Radachse 2 verbunden, das heißt sie dreht sich bei einer Verdrehbewegung der Radachse 2 mit dieser mit.

Die Radachse 2 ist von einem Radträger 5 getragen, wobei die Radachse 2 einendseitig in eine entsprechend ausgebildete Ausnehmung des Radträgers 5 eingesetzt ist, die mittels eines Ringdeckels 24 verschlossen ist, wobei der Ringdeckel 24 beispielsweise mittels entsprechender Schrauben - wie in den Fign. 1 und 2 gezeigt - mit dem Radträger 5 verbunden sein kann. Der Radträger 5 nimmt die Radachse 2 unter Zwischenordnung eines Radlagers 23 auf, wodurch die Verdrehbarkeit der Radachse 2 gegenüber dem Radträger 5 gewährleistet ist.

Wie die Darstellung nach Fig. 2 erkennen lässt, ist am Radträger 5 ein Bremssattel 4 angeordnet. Dieser Bremssattel 4 ist als Festsattel ausgebildet, das heißt er steht gegenüber der Bremsscheibe, die sich im Betriebsfall mit der Radachse 2 mitdreht, fest.

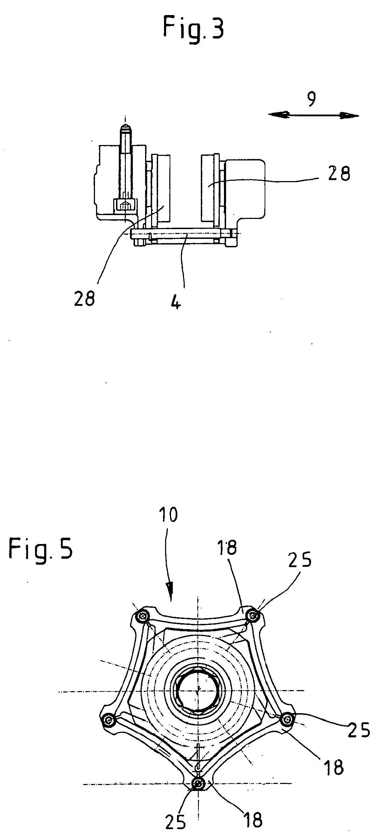

Wie insbesondere die Darstellung nach Fig. 3 erkennen lässt, handelt es sich bei dem in Fig. 2 gezeigten Bremssattel 4 um einen solchen, der über zwei kolbenbelastete Reibmittelträger 28 verfügt. Diese Reibmittelträger 28 wirken im bestimmungsgemäßen Belastungs-, das heißt Bremsfall auf die bremssattelzugewandten Oberflächen der Bremsscheibe 3 ein, das heißt auf die Vorderseite 26 der Bremsscheibe 3 einerseits und die Rückseite 27 der Bremsscheibe 3 andererseits.

Mit der Radachse 2 ist darüber hinaus drehfest ein Rad 6 verbunden, das im gezeigten Ausführungsbeispiel eine Felge 7 und einen davon getragenen Reifen 8 umfasst.

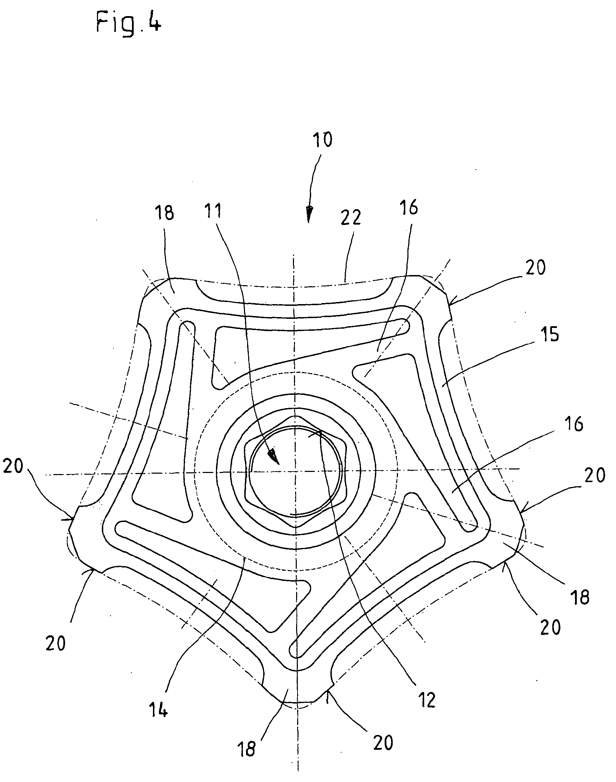

Wie sich insbesondere aus der Darstellung nach Fig. 1 ergibt, ist die Bremsscheibe 3 unter Zwischenordnung eines Verbindungsteils 10 verdrehfest mit der Radachse 2 verbunden. Eine Detailansicht eines solchen Verbindungsteils 10 zeigen die Fign. 4 und 5.

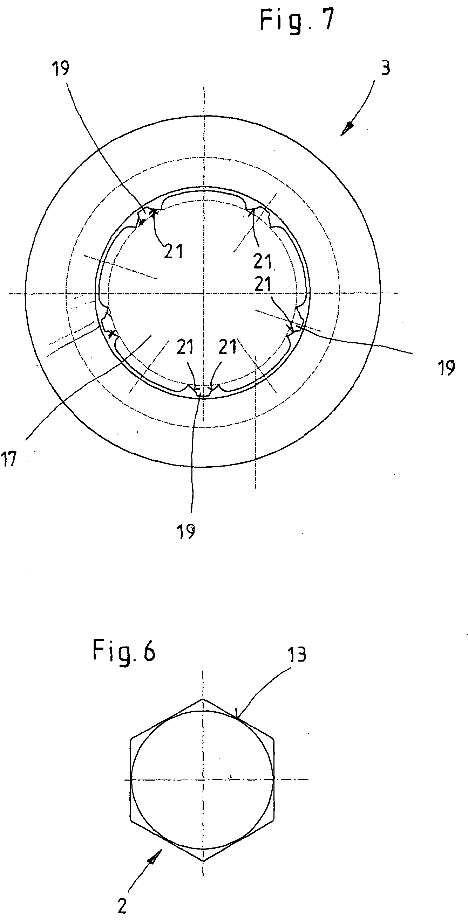

Das Verbindungsteil 10 verfügt über eine Bohrung 11. Die Innenkontur 12 dieser Bohrung 11 ist korrespondierend zur Querschnittskontur 13 der Radachse 2 ausgebildet, wie sich insbesondere bei einer Zusammenschau der Fign. 4 und 6 ergibt. Im gezeigten Ausführungsbeispiel sind die Innenkontur 12 und die Querschnittskontur 13 polygonförmig ausgestaltet.

Das Verbindungsteil 10, auch Polygonverbinder genannt, verfügt über einen Innenring 14, der die vorbeschriebene Bohrung 11 aufweist, und einen Außenring 15, wobei der Innenring 14 und der Außenring 15 über Stege 16 miteinander verbunden sind. Der Außenring 15 des Verbindungsteils 10 verfügt über Fortsätze 18, die mit Bezug auf die Bohrung 11 nach außen ragen. Dabei sind die Fortsätze 18 derart ausgebildet, dass sie die Eckpunkte eines gedachten, das heißt virtuellen Polygons 22 darstellen.

Die Bremsscheibe 3 verfügt über eine zentrische Bohrung 17, wie insbesondere die Darstellung nach Fig. 7 erkennen lässt. Im montierten Zustand der Bremsscheibeneinrichtung 1 ist in diese Bohrung 17 der Bremsscheibe 3 das Verbindungsteil 10 eingesetzt, wie dies die Darstellung nach Fig. 1 erkennen lässt. Dabei greifen im montierten Zustand der Bremsscheibeneinrichtung 1 die Fortsätze 18 des Verbindungsteils 10 in entsprechend ausgebildete Ausnehmungen 19 der Bremsscheibe 3 ein. Ein jeder Fortsatz verfügt über Kraftübertragungsflächen 20, die im montierten Zustand an Gegenflächen 21 der Ausnehmungen 19 der Bremsscheibe 3 anliegen.

Eine Montage der erfindungsgemäßen Bremsscheibeneinrichtung 1 ist denkbar einfach. Das Verbindungsteil 10 kann aufgrund der polygonen Ausgestaltung der Innenbohrung 11 in einfacher Weise auf die korrespondierend hierzu ausgebildete Radachse 2 aufgeschoben und lagefixiert werden. Dabei ist eine verdrehfeste Verbindung von Radachse 2 und Verbindungsteil 10 aufgrund der polygonalen Ausgestaltung sichergestellt. Eine ungewünschte Verschiebung des Verbindungsteils 10 in Längsrichtung 9 der Radachse 2 relativ gegenüber der Radachse 2 ist nach einer Lagesicherung des Verbindungsteils 10 gegenüber der Radachse 2 beispielsweise durch einen Zentralverschluss nicht mehr möglich. Die Bremsscheibe kann sodann auf das Verbindungsteil 10 aufgeschoben werden. Gegebenenfalls kann auch eine Vormontage von Verbindungsteil 10 und Bremsscheibe 3 erfolgen. Von wesentlicher Bedeutung mit Blick auf die erfindungsgemäße Ausgestaltung ist, dass die Bremsscheibe 3 mittels des Verbindungsteils 10 verdrehfest zur Radachse 2 angeordnet ist, gleichwohl aber eine Verschiebung der Bremsscheibe 3 in Längsrichtung 9 der Radachse 2 möglich ist, das heißt die Bremsscheibe 3 relativ gegenüber dem am Radträger 5 angeordneten Bremssattel 4 möglich ist. Diese Verschieblichkeit ist erfindungsgemäß dadurch erreicht, dass das Verbindungsteil 10 aufgrund seiner geometrischen Ausgestaltung in formschlüssigen Eingriff mit der Bremsscheibe 3 gebracht werden kann, welcher Formschluss eine Kraftübertragung in Drehrichtung, nicht aber in Längsrichtung der Radachse 2 ermöglicht.

### Bezugszeichenliste

- 1: Bremsscheibeneinrichtung
- 2: Radachse
- 3: Bremsscheibe
- 4: Bremssattel
- 5: Radträger
- 6: Rad
- 7: Felge
- 8: Reifen
- 9: Längsrichtung
- 10: Verbindungsteil
- 11: Bohrung
- 12: Innenkontur
- 13: Querschnittskontur
- 14: Innenring
- 15: Außenring
- 16: Steg
- 17: Bohrung
- 18: Fortsatz
- 19: Ausnehmung
- 20: Kraftübertragungsfläche
- 21: Gegenfläche
- 22: Polygon
- 23: Radlager
- 24: Ringdeckel
- 25: Bohrung
- 26: Vorderseite
- 27: Rückseite
- 28: Reibmittelträger

## Patentansprüche

1. Radbaugruppe eines Kraftfahrzeuges, insbesondere eines PKWs, mit einer von einer Radachse (2) verdrehfest aufgenommenen Bremsscheibe (3) und einem mit letzterer zusammenwirkenden Bremssattel (4), der als Festsattel ausgebildet gegenüber der Bremsscheibe (3) feststehend an einem Radträger (5) angeordnet ist, wobei die Bremsscheibe (3) in Längsrichtung (9) der Radachse (2) relativ verschieblich gegenüber dem Bremssattel (4) von der Radachse (2) getragen ist, wobei zum Zwecke der verdrehfesten Verbindung von Bremsscheibe (3) und Radachse (2) ein Verbindungsteil (10) vorgesehen ist, wobei das Verbindungsteil (10) einen Verbindungsabschnitt (12) zur Radachse und einen Anschlussbereich (20) zur Bremsscheibe aufweist, **dadurch gekennzeichnet dass** der Verbindungsabschnitt und der Anschlussbereich durch Polygondrehen unrund geformt sind.

2. Radbaugruppe nach Anspruch 1, **dadurch gekennzeichnet, dass** das Verbindungsteil (10) sowohl mit der Bremsscheibe (3) als auch mit der Radachse (2) formschlüssig in Eingriff steht.

3. Radbaugruppe nach Anspruch 2, **dadurch gekennzeichnet, dass** das Verbindungsteil (10) eine Bohrung (11) mit einer zur Querschnittskontur (13) der Radachse (2) korrespondierend ausgebildeten Innenkontur (12) aufweist.

4. Radbaugruppe nach Anspruch 3, **dadurch gekennzeichnet, dass** die Querschnittskontur (13) der Radachse (2) und die Innenkontur (12) der Bohrung (11) des Verbindungsteils (10) polygonal ausgebildet sind.

## Claims

1. A wheel assembly of a motor vehicle, in particular a passenger car, comprising a brake disk (3) received in a rotation-resistant manner by a wheel axle (2) and a brake caliper (4) cooperating with said brake disk (3), which brake caliper is designed as fixed caliper and arranged on a wheel carrier (5) in a stationary manner with respect to the brake disk (3), wherein the brake disk (3) is carried by the wheel axle (2) in such a manner that it can be relatively displaced with respect to the brake caliper (4) in the longitudinal direction (9) of the wheel axle (2), wherein a connecting part (10) is provided for the purpose of the rotation-resistant connection between the brake disk (3) and the wheel axle (2), wherein the connecting part (10) comprises a connecting section (12) to the wheel axle and a connection area (20) to the brake disk, **characterized in that** the connecting section and the connection area are shaped in an unround manner by polygon turning.

2. A wheel assembly according to claim 1 .**characterized in that** the connecting part (10) is in positive engagement with both the brake disk (3) and the wheel axle (2).

3. A wheel assembly according to claim 2, **characterized in that** the connecting part (10) comprises a bore (11) having an inner contour (12) which corresponds to the cross sectional contour (13) of the wheel axle (2).

4. A wheel assembly according to claim 3, **characterized in that** the cross sectional contour (13) of the wheel axle (2) and the inner contour (12) of the bore (11) of the connecting part (10) are polygonal.

## Revendications

1. Module de roues d'un véhicule à moteur, notamment d'une automobile, comprenant un disque de frein (3) reçu de manière résistant à la rotation par un essieu de roues (2) et un étrier de frein (4) coopérant avec ledit disque de frein (3), lequel étrier de frein est configuré comme étrier fixe et disposé sur un support de roue (5) de manière stationnaire par rapport au disque de frein (3), le disque de frein (3) étant porté par l'essieu de roues (2) de sorte qu'il peut être déplacé relativement par rapport à l'étrier de frein (4) dans la direction longitudinale (9) de l'essieu de roues (2), une partie de liaison (10) étant prévue dans le but d'une liaison résistante à la rotation entre le disque de frein (3) et l'essieu de roues (2), la partie de liaison (10) comprenant une section de liaison (12) avec l'essieu de roues et une zone de raccordement (20) au disque de frein, **caractérisé en ce que** la section de liaison et la zone de raccordement sont mises en forme non ronde par polygonage.

2. Module de roues selon la revendication 1, **caractérisé en ce que** la partie de liaison (10) est en prise par complémentarité de forme avec le disque de frein (3) et l'essieu de roues (2).

3. Module de roues selon la revendication 2, **caractérisé en ce que** la partie de liaison (10) comprend un trou de forage (11) ayant un contour intérieur (12) qui correspond au contour de la section transversale (13) de l'essieu de roues (2).

4. Module de roues selon la revendication 3, **caractérisé en ce que** le contour de la section transversale (13) de l'essieu de roues (2) et le contour intérieur du trou de forage (11) de la partie de liaison (10) sont polygonaux.
